# EUROPÄISCHE PATENTSCHRIFT

(11) **EP 2 248 697 B1**
(45) Veröffentlichungstag und Bekanntmachung des Hinweises auf die Patenterteilung: **03.08.2011**
(21) Anmeldenummer: 10156305.4
(22) Anmeldetag: 12.03.2010
(51) Int. Cl.: B60K 17/10, B60K 17/346, F16H 47/04

(54) **Antriebsstrang eines Kraftfahrzeuges**
Powertrain of a motor vehicle
Conducteur de commande d'un véhicule automobile

(30) Priorität: 05.05.2009 DE 102009002806
(43) Veröffentlichungstag der Anmeldung: 10.11.2010
(73) Patentinhaber: ZF Friedrichshafen AG, 88038 Friedrichshafen (DE)
(72) Erfinder: Grossmann, Christoph, 94036, Passau (DE); Hirschmann, Frank, 94121, Salzweg (DE); Kerschbaummayr, Alfred, 4400, Steyr (AT); Hüttinger, Karl, 72622, Nürtingen (DE); Geisler, Michael, 76149, Karlsruhe (DE); Giessner, Karl-Heinz, 76476, Bischweier (DE); Schaude, Bernd, 76597, Loffenau (DE)

(56) Entgegenhaltungen:
- DE-A1-102006 057 836

## Beschreibung

Die Erfindung betrifft den Antriebsstrang eines Kraftfahrzeuges mit kurzem Radstand und zuschaltbarem oder permanentem Allradantrieb gemäß dem Oberbegriff des Patentanspruchs 1.

Nutzranrzeuge mit zuschaltbarem oder permanentem Allradantrieb, die beispielsweise im Kommunalbereich oder für Aufgaben im Gelände eingesetzt werden, sind in der Regel mit kurzen Radständen ausgeführt, um dadurch eine hohe Manövrierfähigkeit gewährleisten zu können. Ferner sind derartige Fahrzeuge in der Regel in Rahmenbauweise ausgeführt, wobei die Antriebsstrangkomponenten Verbrennungsmotor, Fahrgetriebe, Längsverteilergetriebe mit Differential und Achsen separat im Rahmen aufgehängt und vorzugsweise über Gelenkwellen miteinander verbunden sind.

Hierbei wird die Antriebsleistung vom Verbrennungsmotor über das Fahrgetriebe und ein anschließendes Verteilergetriebe mit Differential auf die Vorder- und die Hinterachse übertragen, wobei die Verbindungen zwischen dem Verteilergetriebe und den angetriebenen Achsen mittels Gelenkwellen realisiert sind. Um große Federwege an den Achsen bei gleichzeitig geringen Beugewinkeln der Gelenkwellen zu erreichen, wird ferner angestrebt, das Verteilergetriebe axial betrachtet möglichst mittig zwischen die Achsen anzuordnen, was in vorteilhafter Weise auch in einer günstigen Schwerpunktslage für das Fahrzeug resultiert.

Durch die Anordnung des Verbrennungsmotors des Fahrzeugs ist die axiale Position des Abtriebsflansches entlang der Fahrtrichtungsachse oft zwischen den Fahrzeugachsen, was darin resultiert, dass der Eingangsflansch des Fahrgetriebes und die Abtriebsflansche des Verteilergetriebes zu den Gelenkwellen bei der erwünschten mittigen Anordnung zwischen den Achsen in etwa gleicher axialer Position liegen.

In der Regel weisen Fahrgetriebe jedoch eine deutlich abweichende axiale Position ihres An- und Abtriebsflansches auf, was in nachteiliger Weise zu einer Verschiebung des Verbrennungsmotors in Vorwärtsfahrtrichtung nach vorne, zu einer Vergrößerung des Radstands oder zu einem größeren Beugewinkel zumindest einer Gelenkwelle führt.

Beispielsweise ist aus der gattungsbildenden. DE 10 2006 057 836 A1 ein Antriebsstrang eines universellen allradgetriebenen Kleinlastkraftwagens und Geräteträgers für die Landwirtschaft und für kommunale Aufgaben bekannt, bei dem eine eine mechanischhydrostatische Leistungsverzweigung beinhaltende Baueinheit einer Ackerschlepper-Stufenlosgetriebeeinheit mit einem Adaptionsgetriebe kombiniert wird, so dass eine hohe Fahrgeschwindigkeit erreicht wird. Bei dem bekannten Antriebsstrang ist ein Längsverteilergetriebe vorgesehen, mittels dessen die Antriebsleistung auf zumindest zwei Achsen verteilt wird.

Der vorliegenden Erfindung liegt die Aufgabe zugrunde, einen Antriebsstrang eines Kraftfahrzeuges mit kurzem Radstand und zuschaltbarem oder permanentem Allradantrieb, umfassend einen Verbrennungsmotor, ein Fahrgetriebe mit abweichenden axialen Positionen des An- und Abtriebsflansches und ein mit dem Abtrieb des Fahrgetriebes verbundenes Verteilergetriebe mit Differential anzugeben, bei dem der An- und Abtrieb des Fahr- und Verteilergetriebes mit Differential in etwa die gleiche axiale Position aufweisen und das Verteilergetriebe axial betrachtet in einer mittigen Lage zwischen den Achsen angeordnet ist.

Diese Aufgabe wird durch die Merkmale des Patentanspruchs 1 gelöst. Weitere erfindungsgemäße Ausgestaltungen und Vorteile gehen aus den Unteransprüchen hervor.

Auf diese Weise wird eine Positionierung des Verteilergetriebes in der gewünschten vorteilhaften mittigen Lage zwischen den Achsen ermöglicht. In vorteilhafter Weise ist eine derartige Positionierung des Verteilergetriebes im Allgemeinen unkritisch hinsichtlich des erforderlichen Bauraums und günstig für die Schwerpunktsverteilung des Fahrzeugs.

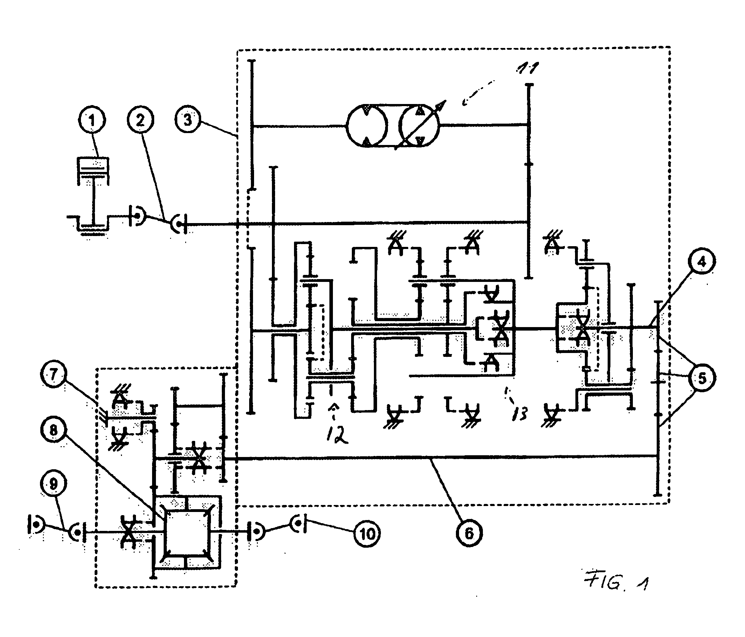

Die Erfindung wird im Folgenden anhand der beigefügten Figur, welche eine schematische Darstellung eines Antriebsstrangs eines Kraftfahrzeuges mit kurzem Radstand und zuschaltbarem oder permanentem Allradantrieb ist beispielhaft näher erläutert.

Der in der Figur gezeigte Antriebsstrang umfasst einen Verbrennungsmotor 1, welcher über eine Gelenkwelle 2 ein Stufenlos-Fahrgetriebe 3 (CVT-Getriebe) antreibt, dessen Abtrieb 4 axial betrachtet nach hinten verschoben ausgeführt ist.

Bei dem gezeigten Beispiel ist das Stufenlos-Fahrgetriebe 3 als stufenloses hydrostatisch-mechanisches Leistungsverzweigungsgetriebe ausgeführt, welches nach dem Stand der Technik ein stufenlos verstellbares Hydrostatgetriebe 11 mit einer volumenverstellbaren und einer volumenkonstanten Einheit, ein Summierungsgetriebe 12 und ein Bereichsgetriebe 13 mit mehreren schaltbaren Gängen aufweist. Die über die Gelenkwelle 2 eingeleitete Leistung verzweigt sich zum einen zu dem Hydrostatgetriebe 11 und zum anderen auf eine Eingangswelle des Summierungsgetriebes 12.

Durch das Summierungsgetriebe 12 werden die Drehzahlen und Drehmomente des Hydrostatgetriebes 11 und des Verbrennungsmotors 1 zusammengeführt, wobei mit Hilfe von Schaltelementen verschiedene Gänge anwählbar sind, indem die Ausgangswelle des Summierungsgetriebes 12 über unterschiedliche Übersetzungsstufen mit dem Fahrgetriebeabtrieb 4 gekoppelt wird.

Wie aus der Figur ersichtlich, ist der Fahrgetriebeabtrieb 4 über ein Stirnradgetriebe 5 parallel versetzt, wobei die Antriebsleistung über eine mit dem Stirnradgetriebe 5 verbundene Verlagerungswelle 6 in Fahrtrichtung nach vorne in das Verteilergetriebe 7 übertragen wird.

Das Verteilergetriebe 7 weist ein Differential 8 auf, mittels dessen die Antriebsleistung optional auf die Gelenkwelle 9 zur Vorderachse und/oder die Gelenkwelle 10 zur Hinterachse des Fahrzeugs verteilt wird. Das Verteilergetriebe 7 ist axial betrachtet zwischen der Vorderachse und der Hinterachse im Wesentlichen mittig angeordnet. Ferner weisen der An- und Abtrieb des Fahr- und Verteilergetriebes im Wesentlichen die gleiche axiale Position auf.

Das Differential 8 kann beispielsweise als Kegelraddifferential ausgeführt sein; im Rahmen weiterer Ausführungsformen ist es möglich, das Differential 8 als Stirnraddifferential mit oder ohne Schaltung bzw. Sperre auszuführen.

Durch die erfindungsgemäße Konzeption wird der Vorteil erzielt, dass der An- und Abtrieb des Fahr- und Verteilergetriebes mit Differential 8 im Wesentlichen die gleiche axiale Position aufweisen, wobei das Verteilergetriebe 7 axial betrachtet in einer mittigen Lage zwischen den angetriebenen Achsen des Fahrzeugs angeordnet ist.

### Bezugszeichen

- 1: Verbrennungsmotor
- 2: Gelenkwelle
- 3: Stufenlos-Fahrgetriebe
- 4: Fahrgetriebeabtrieb
- 5: Stirnradgetriebe
- 6: Verlagerungswelle
- 7: Verteilergetriebe
- 8: Differential
- 9: Gelenkwelle
- 10: Gelenkwelle
- 11: Hydrostatgetriebe
- 12: Summierungsgetriebe
- 13: Bereichsgetriebe

## Patentansprüche

1. Antriebsstrang eines Kraftfahrzeuges mit kurzem Radstand und zuschaltbarem oder permanentem Allradantrieb, umfassend einen Verbrennungsmotor (1), ein Fahrgetriebe (3), ausgebildet als stufenlos hydrostatisch mechanisches Leistungsverzweigungsgetriebe mit abweichenden axialen Positionen des An- und Abtriebsflansches und ein mit dem Abtrieb (4) des Fahrgetriebes (3) verbundenes Verteilergetriebe (7) mit Differential (8), mittels dessen die Antriebsleistung auf die Vorderachse und/oder die Hinterachse verteilt wird, **dadurch gekennzeichnet, dass** der Fahrgetriebeabtrieb (4) am gegenüberliegenden Ende des Fahrgetriebes (3) zum Antriebsflansch des Fahrgetriebes (3) angeordnet ist und über ein nachgeschaltetes Stirnradgetriebe (5) eine Verlagerungswelle (6) antreibt, welche zum Fahrgetriebeabtrieb (4) parallel versetzt ist wodurch die Antriebsleistung von dem Fahrgetriebeabtrieb (4) über die mit dem Stirnradgetriebe (5) verbundene Verlagerungswelle (6) in Vorwärtsfahrtrichtung nach vorne in das axial betrachtet zwischen der Vorderachse und der Hinterachse im wesentlichen mittig und am gleichen Ende des Fahrgetriebes (3) wie der Antriebsflansch des Fahrgetriebes (3) angeordnete Verteilergetriebe (7) übertragen wird.

2. Antriebsstrang eines Kraftfahrzeuges mit kurzem Radstand und zuschaltbarem oder permanentem Allradantrieb, nach Anspruch 1, **dadurch gekennzeichnet, dass** der An- und Abtrieb des Fahr- und Verteilergetriebes (3, 7) im Wesentlichen die gleiche axiale Position aufweisen.

3. Antriebsstrang eines Kraftfahrzeuges mit kurzem Radstand und zuschaltbarem oder permanentem Allradantrieb, nach Anspruch 1, oder 2, **dadurch gekennzeichnet, dass** die Verbindungen zwischen dem Verteilergetriebe (7) und den angetriebenen Achsen und die Verbindung zwischen dem Verbrennungsmotor (1) und dem Fahrgetriebe (3) mittels Gelenkwellen (9, 10, 2) realisiert sind.

4. Antriebsstrang eines Kraftfahrzeuges mit kurzem Radstand und zuschaltbarem oder permanentem Allradantrieb, nach Anspruch 1, 2, oder 3, **dadurch gekennzeichnet, dass** das Differential (8) als Kegelraddifferential oder als Stirnraddifferential mit oder ohne Schaltung bzw. Sperre ausgeführt ist.

5. Antriebsstrang eines Kraftfahrzeuges mit kurzem Radstand und zuschaltbarem oder permanentem Allradantrieb, nach einem der vorangehenden Ansprüche, **dadurch gekennzeichnet, dass** das Fahrgetriebe (3) als stufenloses hydrostatisch - mechanisches Leistungsverzweigungsgetriebe ausgeführt ist, welches ein stufenlos verstellbares Hydrostatgetriebe (11) mit einer volumenverstellbaren und einer volumenkonstanten Einheit, ein Summierungsgetriebe (12) und ein Bereichsgetriebe (13) mit mehreren schaltbaren Gängen aufweist.

## Claims

1. Drivetrain of a motor vehicle with a short wheelbase and with switchable or permanent all-wheel drive, comprising an internal combustion engine (1), a drive transmission (3) designed as a continuously variable hydrostatic-mechanical power takeoff transmission with the drive input flange and drive output flange at different axial positions, and a power divider (7) which is connected to the drive output (4) of the drive transmission (3) and which has a differential (8) by means of which the drive power is distributed to the front axle and/or the rear axle, **characterized in that** the drive transmission drive output (4) is arranged at the opposite end of the drive transmission (3) from the drive input flange of the drive transmission (3) and, via a downstream spur gear mechanism (5), drives a displacement shaft (6) which is offset in parallel with respect to the drive transmission drive output (4), as a result of which the drive power from the drive transmission drive output (4) is transmitted, via the displacement shaft (6) connected to the spur gear mechanism (5), forward in the forward direction of travel into the power divider (7) which is arranged axially substantially centrally between the front axle and the rear axle and at the same end of the drive transmission (3) as the drive input flange of the drive transmission (3).

2. Drivetrain of a motor vehicle with a short wheelbase and with switchable or permanent all-wheel drive according to Claim 1, **characterized in that** the drive input and drive output of the drive transmission and power divider (3, 7) are at substantially the same axial position.

3. Drivetrain of a motor vehicle with a short wheelbase and with switchable or permanent all-wheel drive according to Claim 1 or 2, **characterized in that** the connections between the power divider (7) and the driven axles and the connection between the internal combustion engine (1) and the drive transmission (3) are realized by means of articulated shafts (9, 10, 2).

4. Drivetrain of a motor vehicle with a short wheelbase and with switchable or permanent all-wheel drive according to Claim 1, 2 or 3, **characterized in that** the differential (8) is designed as a bevel gear differential or as a spur gear differential with or without a shifting or locking facility.

5. Drivetrain of a motor vehicle with a short wheelbase and with switchable or permanent all-wheel drive according to one of the preceding claims, **characterized in that** the drive transmission (3) is designed as a continuously variable hydrostatic-mechanical power takeoff transmission, the latter having a continuously variable hydrostatic transmission (11) with a unit of adjustable volume and with a unit of constant volume, having a summing transmission (12) and having a range transmission (13) with a plurality of shiftable gears.

## Revendications

1. Chaîne cinématique d'un véhicule automobile, avec un petit écartement des roues et un entraînement toutes roues motrices commutable ou permanent, comprenant un moteur à combustion interne (1), une transmission d'entraînement (3) réalisée sous forme de transmission hydrostatique-mécanique à variation continue et à répartition de puissance avec des positions axiales différentes de la bride d'entraînement et de prise de force, et une transmission intermédiaire (7) raccordée à la prise de force (4) de la transmission d'entraînement (3) avec un différentiel (8), au moyen duquel la puissance d'entraînement est répartie à l'essieu avant et/ou à l'essieu arrière, **caractérisée en ce que** la prise de force (4) de la transmission d'entraînement est disposée à l'extrémité opposée de la transmission d'entraînement (3) par rapport à la bride d'entraînement de la transmission d'entraînement (3) et entraîne, par le biais d'une transmission à pignons droits (5) montée en aval, un arbre de décalage (6) qui est décalé parallèlement à la prise de force (4) de la transmission d'entraînement de sorte que la puissance d'entraînement soit transmise de la prise de force (4) de la transmission d'entraînement par le biais de l'arbre de décalage (6) raccordé à la transmission à pignons droits (5) dans la direction de marche avant vers l'avant à la transmission intermédiaire (7) disposée, vue axialement, entre l'essieu avant et l'essieu arrière substantiellement centralement et sur la même extrémité de la transmission d'entraînement (3) que la bride d'entraînement de la transmission d'entraînement (3).

2. Chaîne cinématique d'un véhicule automobile, avec un petit écartement des roues et un entraînement toutes roues motrices commutable ou permanent selon la revendication 1, **caractérisée en ce que** l'entraînement et la prise de force de la transmission d'entraînement et de la transmission intermédiaire (3, 7) présentent essentiellement la même position axiale.

3. Chaîne cinématique d'un véhicule automobile, avec un petit écartement des roues et un entraînement toutes roues motrices commutable ou permanent selon la revendication 1 ou 2, **caractérisée en ce que** les connexions entre la transmission intermédiaire (7) et les essieux entraînés et la connexion entre le moteur à combustion interne (1) et la transmission d'entraînement (3) sont réalisées au moyen d'arbres articulés (9, 10, 2).

4. Chaîne cinématique d'un véhicule automobile, avec un petit écartement des roues et un entraînement toutes roues motrices commutable ou permanent selon la revendication 1, 2 ou 3, **caractérisée en ce que** le différentiel (8) est réalisé sous forme de différentiel à pignons coniques ou sous forme de différentiel à pignons droits, avec ou sans commutation ou verrouillage.

5. Chaîne cinématique d'un véhicule automobile, avec un petit écartement des roues et un entraînement toutes roues motrices commutable ou permanent selon l'une quelconque des revendications précédentes, **caractérisée en ce que** la transmission d'entraînement (3) est réalisée sous forme de transmission hydrostatique-mécanique à variation continue et à répartition de puissance qui présente une transmission hydrostatique (11) réglable en continu avec une unité à volume réglable et une unité à volume constant, un engrenage combineur (12) et une boîte-relais (13) avec plusieurs rapports commutables.
